# EUROPEAN PATENT APPLICATION

(11) **EP 2 897 431 A1**
(43) Date of publication of application: **22.07.2015**
(21) Application number: 14151591.6
(22) Date of filing: 17.01.2014
(51) Int. Cl.: H04W 68/02

(54) **Method for paging of a wireless device operated in a wireless network**

(71) Applicant: Gemalto M2M GmbH, 81541 München (DE)
(72) Inventor: Breuer, Volker, 16727 Boetzow (DE); Wehmeier, Lars, 14612 Falensee (DE); Ulrich, Thomas, 67098 BAD DÜRKHEIM (DE)
(74) Representative: Grevin, Emmanuel

(57) **Abstract**

The present invention relates to a wireless device (1) configured to operate in a wireless network (5), configured to transmit signalling intended to be decoded by wireless devices (1) according to a periodic time pattern, the wireless device (1) being further configured to communicate with at least one remote device (6) by means of the wireless network (5) according to a predefined schedule defining realtime windows (23),
wherein the communication according to the predefined schedule comprises:
- when operating inside said realtime window (23)
- decoding signalling originated from the wireless network (5) according to the periodic time pattern and

- when operating outside said realtime window (23)
- ignoring signalling originated from the wireless network (5) and

- whenever operating inside or outside of said realtime window (23), when information to be sent to the remote device (6) is available
- initiating communication to said remote device (6).

## Description

### FIELD OF THE INVENTION

The present invention relates to a method for operating a wireless device in a wireless network, configured to transmit signalling intended to be decoded by wireless devices, according to a periodic time pattern.

The invention also pertains to a wireless device using said method. It further relates to a wireless network configured to operate a plurality of said wireless devices.

### BACKGROUND OF THE INVENTION

Generally, the amount of wireless devices which are so called machine-to-machine (M2M) devices is increasing. M2M devices are wireless devices capable of operating within wireless networks and conduct communication with other devices. Unlike cellular phones that are assigned to one person and where the increase in terms of numbers year-over year is decreasing, for the amount of M2M devices there is no theoretical upper boundary. This situation is beginning to cause problems for wireless networks for cellular communications. Those problems are on the one hand based on the mere amount of M2M devices but on the other hand based on the communication profile.

Depending on the device type, the communication profile from M2M devices can be very different. Some M2M devices are more or less used like mobile phones, enriched with some data transfer, like in cars. Other device types only rarely but regularly communicate with another device, but mainly in mobile originated (MO) communications. That means only the M2M device sends data to another device, like a central server for data collections. This is particularly true for metering devices or any other wireless devices which measure information in the field and send it to a central server. Communication initiated by the central server to the M2M device (mobile terminated, MT) is in the sketched M2M context very rare.

The wireless networks are now configured in such a way that they need to be ready to allow all types of communication, voice and data, MO and MT. For that purpose, information that data - a call or a data connection - dedicated for a wireless device is available, are regularly sent to such a wireless device and have to be decoded by the wireless device. This process is called paging and happens in a frequency between 640 ms up to 5.12 seconds for each paging request. Such paging is classically configured for a wireless network by certain parameter defined in wireless technology standards.

It is obvious that, for a M2M device that sends once a day or a month data to one dedicated central server and retrieves even less frequent information from that central server, such a paging frequency is not well suited. It causes signalling load for the wireless networks and requires energy at the M2M device, which in many cases is powered by batteries.

By now, known approaches to cope with this situation are focused on a reduction of the paging frequency or to allow the wireless device to skip a certain amount of paging requests. In effect these approaches lead to a decrease of paging frequency to up to a couple of seconds, but do not materially solve the problem as such.

It is therefore a goal of present invention to provide a method that allows wireless devices, in particular those M2M devices with a communication profile for mainly operating MO communication, to operate in the wireless network and support a paging regime with materially reduced signalling and power requirements.

Further alternative and advantageous solutions would, accordingly, be desirable in the art.

### SUMMARY OF THE INVENTION

The present invention aims to reach the addressed goal by a wireless device according to claim 1. It also relates to a method to operate a wireless device according to claim 9. It further relates to a wireless network according to claim 10.

It is therefore according to a first aspect of the invention proposed a wireless device configured to operate in a wireless network, configured to transmit signalling intended to be decoded by wireless devices according to a periodic time pattern, the wireless device being further configured to communicate with at least one remote device by means of the wireless network according to a predefined schedule defining realtime windows, wherein the communication according to the predefined schedule comprises:
- when operating inside said realtime window,
   - decoding signalling originated from the wireless network according to the periodic time pattern, and
- when operating outside said realtime window
   - ignoring signalling originated from the wireless network and
- whenever operating inside or outside of said realtime window, when information to be sent to the remote device is available
   - initiating communication to said remote device.

The wireless device is a device configured to be operating in a wireless network. The wireless device is preferably equipped with communication means, including an antenna as hardware interface to the wireless link to the wireless network.

Preferably the wireless device is a machine-to-machine or M2M device that typically comprises an M2M module as communication unit. The wireless device itself is preferably equipped with sensor(s) for measuring or detecting any kind of environmental metrics, like power consumption in case of a metering device, a weather measuring station or the filling status of a vending machine. The wireless device is therefore dedicated to provide measurements on a regular basis to a defined remote device, in particular a central server that is collecting said measurements from a plurality of M2M devices. The address or the call number of the remote device is typically preconfigured when the M2M device is installed in the field.

The wireless network comprises a plurality of network nodes, representing cells of the wireless network. The wireless network supports wireless access technology standards defined by ETSI and 3GPP, in particular GSM/GPRS/EDGE (also known as 2G), UMTS/WCDMA/HSPA (also known as 3G), LTE/LTE-advanced (also known as 4G).

It is configured to transmit signalling intended to be decoded by wireless devices. Such signalling comprises a multitude of channels, including common channels and dedicated or device specific channels. One dedicated channel is the paging channel which besides others informs the wireless device about incoming calls, short messages or network messages, as well as data connection requests etc. In order to be able to react on such a paging message, the wireless device had to decode the paging channel according to the frequency it is transmitted and in case of such a request has to take appropriate measures, in particular to send a response to the wireless network to confirm the paging request.

Further the wireless network is configured to transmit said signalling according to a periodic time pattern. That means that generally the signalling, in particular the paging messages, are sent repeatedly with a short gap between two transmissions, whereby the gap is not longer than a few seconds.

According to the invention, the wireless device is configured to communicate with said remote device according to a predefined schedule. Said type of communication can both be mobile originated as well as mobile terminated. This predefined schedule is configured that way that it defines at least one realtime window. This realtime window is a defined time period, comprising information relative to a point in time when the time period starts, the length of the period and/or the frequency when this realtime window is repeated. The point in time when the time period starts is defined at least in days and hours, for instance the first Monday of a month at 8 p.m. The frequency of repetition is then therefore monthly. There are a couple of ways to configure such a predefined schedule, one example is a textual coding like known from geographic data format (GDF) time domain codings, but other codings are possible as well.

The communication of the wireless device is conducted according to the predefined schedule, considering the following rules:

Mobile terminated communication is only decoded by the wireless device when operating inside of the realtime window. Such mobile terminated communication can both comprise any type of signalling from the wireless network but also incoming message from remote devices. As incoming messages from a remote device are handled by the wireless network by means of a paging message from the wireless network to the wireless device, the wireless device has only to consider signalling originated from the wireless network.

Mobile originated communication is not affected by the realtime window. That means, whenever there are information that are to be sent to the remote device, in particular when a measuring has happened or indicates a certain event, or when the regular scheduled measurement data upload is due, then the wireless device can send the data regardless of the realtime window. During the realtime window, e.g. for an hour, the decoding of signalling originated from the wireless network is conducted by the wireless device according to the periodic time pattern. That means that in the realtime window the wireless device is behaving like in a normal paging mode. In other words, a paging message is only decoded by the wireless device when the two conditions apply:
- the paging message is sent according to the periodic time pattern, and
- the wireless device is operating in the realtime window.

The advantage of the invention is that the wireless device can avoid decoding paging messages outside of the realtime window without the risk of missing messages. The wireless device can thus save a remarkable amount of energy which is in particular important for wireless devices powered by batteries. The peculiarity of the invention is that there is an imbalance between MO and MT communication. That means MO communication can be launched at any time, while MT communication is only retrieved during the realtime window. Hence this scheme is matching to the described group of M2M devices with a communication profile comprising mainly MO communication. The power saving can be achieved without remarkable limitations of the operation of the wireless device.

In a further preferred embodiment it is proposed a wireless device being further configured to decode signalling originated from the wireless network outside of the realtime window for a predefined period following a communication initiated by the wireless device.

When the wireless device initiates a communication (MO), e.g. sending data to the remote device, it is in addition to the realtime window capable of decoding signalling from the wireless network. This embodiment thus allows a second occasion when the wireless device is reachable for MT communication; both such phases are hereinafter called paging reception phase. Typically the predefined period lasts a couple of minutes and, in the easiest case, it is a constant duration. Variable durations, in particular depending upon the time since the last realtime window and/or MO communication, can also be advantageous.

With this embodiment, once a wireless network configured to transmit messages to the wireless device only when the wireless device is in a paging reception phase detects a mobile originated communication, it thus has an indication that the wireless device is again able to receive communication. Any type of message to be sent to the wireless device can be buffered until the wireless device is in a paging reception phase.

This is in particular true when broadcast messages are to be sent. According to the prior art a registered wireless device is used to retrieve broadcast messages, in particular sent by means of a broadcast channel, during one paging cycle resp. discontinuous reception (DRX) cycle, if there is a change in the broadcast channel. This is indicated by a so-called BCCH (Broadcast Control CHannel) change notification.

This BCCH change notification is set upon such a change and retrieved by the wireless device during paging. With that, the wireless device is informed that the broadcast channel is to be read. To cope with the situation according to the invention, that wireless devices do not read the paging channel within one paging cycle, it is advantageous that the wireless network sends the BCCH change notification only during the paging reception phase of a wireless device to the wireless device.

Alternatively it would be possible to read out the broadcast channel each time it reaches a paging reception phase. It is however less advantageous in terms of energy consumption on wireless device side.

According to a further preferred embodiment, it is proposed a wireless device being further configured to decode signalling according to an uninterrupted periodic time pattern upon decoding of signalling originated from the wireless network comprising a respective indication.

When the wireless device is in the paging reception phase it can retrieve from wireless network indications about various configuration changes. One such configuration change is a switch to the normal paging mode. During that normal paging mode, the wireless device is configured to decode each signalling according to the periodic time pattern used by the wireless network, that means each paging message irrespective of the predefined schedule with a realtime window. The periodic time pattern is thus uninterrupted.

There can be situations where the wireless network needs to assure that one or more wireless devices decode all signalling from the wireless network, in particular if it is known that a larger amount of signalling is about to be sent to the wireless device. This is in particular true for planned maintenance or update tasks. It is thus advantageous if a remote device - of course guarded with appropriate security measures - can force the switch to the normal paging mode as well.

According to a preferred embodiment, it is proposed a wireless device being further configured to return to the predefined schedule under the condition that
- a communication initiated from the wireless network has ended, or
- an indication from the wireless network indicates the return, or
- after a predefined period has expired.

For the case that the wireless device got an indication to switch to the normal paging mode, this embodiment is to define under what conditions the wireless device switches back to the mode according to the invention, hereinafter reduced paging mode.

The switch back can, according to this embodiment, either be triggered by communication related events, in particular end of communication initiated from wireless network or from wireless device, or on request from the wireless network. The request is possible and advantageous as the wireless device is operating in normal paging mode and therefore listens to each signalling retrieved from the wireless network.

Alternatively the switch is triggered by a time event, which means after a predefined time period has expired.

Several options can be applied in parallel, following the rule whichever condition is first fulfilled. It is also possible that, with the request to switch to normal paging mode, an indication is given, what condition has to be met to switch back to reduced paging mode.

In a preferred embodiment, it is proposed a wireless device being further configured to change the realtime window according to the predefined schedule upon decoding of said signalling originated from the wireless network comprising a respective indication.

During a paging reception phase, the wireless network can further signal a change of the predefined schedule, and in effect of the realtime window. This change can affect the realtime window in terms of length, frequency and/or starting point. This signalling can further be initiated by a remote device, in particular the central server, which provides such type of commands during a maintenance phase. A change of realtime window can in particular be made in response to increasing traffic load on the wireless network resp. more wireless devices of the same type operating in the wireless network.

According to another preferred embodiment, it is proposed a wireless device being associated to a set of subscriptions, themselves associated to the wireless network, hereinafter domain, wherein the wireless device is configured to communicate according to a domain specific predefined schedule.

It is advantageous to provide a domain for special types of wireless devices, in particular M2M devices. As such an M2M domain consists of M2M devices and provides network parameter adapted for the concerned wireless devices. Such adapted network parameters are different from those for normal wireless devices, in particular cellular phones. This is in particular true for wireless devices according to the present invention and its preferred embodiments.

As a result all wireless devices being part of the domain are configured to communicate according to a domain specific predefined schedule. That means that all wireless devices that are part of the same domain have the same predefined schedule. That does not necessary means that each of the wireless device has identical realtime windows, but at least they follow the same rules. Those rules can take into account additional parameters which lead to different realtime windows for different wireless devices that are part of one domain.

In a further preferred embodiment, it is suggested a wireless device wherein the domain specific predefined schedule comprises a rule to define a realtime window specific to the wireless device.

This embodiment is one example of realtime windows which are not equal for all wireless devices of the domain. At least one wireless device has another predefined schedule defining another realtime window.

In terms of congestions, this is advantageous as it prevents a signalling peak during the time of the realtime window, when all wireless devices of the domain have the same realtime window and should get signalling just in the moment when the realtime window starts. This behaviour is prevented with such kind of staggered realtime windows.

In another preferred embodiment, it is proposed a wireless device comprising a device parameter and the rule to define the realtime window is based on the device parameter.

As an example for a predefined schedule causing different realtime windows it is suggested that the domain specific predefined schedule is based on a device parameter. That device parameter is at least one value available at the wireless device, e.g. all wireless devices with an IMEI ending on the same number have the same realtime window.

Realtime windows calculated based on such predefined schedule can overlap, but start staggered. Alternatively realtime windows can be according to such a predefined schedule defined taking into account a device parameter also adjacent, at least not overlapping. Configuration capabilities like according to this embodiment provide a great flexibility with low efforts. This also applies to modifications of the predefined schedule. This flexibility allows fine-tuning of the realtime windows in comparison to network resources and to avoid congestion.

According to a second aspect of the invention it is proposed a method for operating a wireless device in a wireless network, the wireless network being configured to transmit signalling intended to be decoded by wireless devices according to a periodic time pattern, wherein the operating method is such that the wireless device communicates with at least one remote device by means of the wireless network according to a predefined schedule defining realtime windows, this communication according to the predefined schedule comprising the steps of:
- when operating inside said realtime window
   - decoding signalling originated from the wireless network according to the periodic time pattern and
- when operating outside said realtime window
   - ignoring signalling originated from the wireless network and
- whenever operating inside or outside of said realtime window, when information to be sent to the remote device is available
   - initiating communication to said remote device.

The method of the second aspect of the present invention shares the advantages achieved with the wireless device of the first aspect of the invention.

According to a third aspect of the invention it is proposed a wireless network configured to operate a plurality of said wireless devices, wherein the wireless network is further configured to
- store an indication about a predefined schedule defining realtime windows for at least one wireless device,
- detect a planned signalling dedicated for said wireless device,
- wait until said wireless device is ready for decoding of signalling originated from the wireless network before transmitting said planned signalling.

The wireless network is operating at least one wireless device as described above and takes advantage of the behaviour of this wireless device. Due to the fact that the wireless device only decodes a signalling initiated from the wireless network to the wireless device during a paging reception phase, it is advantageous that the wireless network only sends planned signalling dedicated for said wireless device during the paging reception phase of the wireless device. In order to do so, the wireless network stores an indication about the predefined schedule defining realtime window for this wireless device.

Of course it is further advantageous if a remote device, in particular the central server assigned to the wireless device, is also aware of the predefined schedule resp. the defined realtime window of the wireless device, in order not to send data transmission requests to the wireless network outside of the realtime window.

A wireless network according to this invention provides an immense reduction of the signalling load, in particular when the number of wireless devices, above all M2M devices, is increasing.

In a preferred embodiment it is proposed a wireless network wherein in response to said detection the wireless network is configured to send an instruction to the wireless device related to said planned signalling from the wireless network.

With this embodiment, the wireless network reacts to the availability of a planned signalling and in particular to the amount or duration of such signalling, e.g. in case of a large update. As such, it informs the wireless device ahead about the planned signalling and gives the wireless device the opportunity to prepare for this planned signalling. Of course the instruction can also only be signalled from the wireless network to the wireless device during a paging reception phase.

There are various options for an instruction that will lead to different reactions of the wireless device.

According to one preferred embodiment, it is proposed a wireless network wherein said indication indicates that the wireless device has to decode signalling according to an uninterrupted periodic time pattern.

In response to such signalling, the wireless device switches to the normal paging mode.

In a further preferred embodiment, it is suggested a wireless network further configured to indicate to the wireless device to return to the predefined schedule upon:
- a communication initiated by the wireless network has ended, or
- a communication from the wireless network indicate the return or
- after a predefined period has expired.

This embodiment describes the options to return to the reduced paging mode described above. In particular the wireless network can provide, preferably already with the first indication to switch to normal paging mode, an indication when to return to the reduced paging mode. The wireless network is further configured to send a second indication to the wireless device urging it to switch back to the reduced paging mode.

According to a further particular feature, it is suggested a wireless network configured to send said indication to the wireless device once the wireless device initiated a communication to the wireless network.

With this embodiment, the wireless network is configured to cope besides the realtime window according to the predefined schedule with a second time period during that the wireless device is ready to accept signalling from the wireless network. The wireless network is therefore able to detect a MO communication from a wireless device, look up if signalling for this wireless device is available and if so conduct the signalling to said wireless device.

In particular for the broadcast use case mentioned above, this is advantageous when the wireless network has a second kind of occasion to provide the wireless device with broadcasting messages resp. broadcast change notifications.

In response to that, the wireless network is preferably configured to collect information for which registered wireless device a BCCH change notification was already retrieved and therefore to know, when the broadcast has reached all registered wireless devices.

In another preferred embodiment, it is proposed a wireless network comprising a set of subscriptions for wireless devices, hereinafter domain, wherein the wireless devices associated to said domain are configured to communicate according to a domain specific predefined schedule. According to this embodiment, the wireless network maintains at least one domain of subscriptions for wireless devices. The wireless network is therefore configured to apply different network parameter on wireless devices being part of the domain and those that are not part of the domain. Such network parameter can provide a wide variety. One example would be the discontinuous reception (DRX) cycle, which can be extended for different domains.

In the case of this invention and its embodiment, it is therefore advantageous to provide different predefined schedules to different domains, and/or to allow the wireless devices being part of one domain to operate according to a predefined schedule defining a realtime window and to decode signalling from the wireless network only within this realtime window.

According to another preferred embodiment, it is suggested a wireless network wherein the real time windows are defined by at least one of the rules:
- the length of the real time window is depending upon the number of wireless devices assigned to the domain, and/or
- the frequency of repetition of the real time window is depending upon the number of wireless devices assigned to the domain.

For wireless devices assigned to a domain, it is provided the domain specific predefined schedule, which can result in different realtime windows for different wireless devices of the domain. The definition of the realtime windows according to the domain specific predefined schedule follows according to this embodiment a set of rules.

These rules are assigned to the management of increasing numbers of wireless devices being part of the domain. According to one rule, the lengths of the realtime windows are defined in dependency from the number of wireless devices in the domain. Typically this is defined that way that the more wireless devices are part of the domain, the shorter the realtime window is. Under the condition that realtime windows do not overlap this also means that more realtime windows are defined.

Increasing numbers of wireless devices can, with assumed constant amount of network resources, be distributed to more realtime windows. In return each of the wireless device has to suffer a slightly shorter realtime window. E.g. if there are defined for a given total repetition time of one day 24 realtime windows of one hour, an additional realtime window would reduce the length of the realtime windows to ca. 57 minutes.

Surely the length of the realtime window is preferably not reduced below a certain threshold, therefore it is advantageous to apply also or alternatively an additional rule. According to this rule it is defined that the frequency of repetition of the realtime window is dependant from the number of wireless devices assigned to the domain.

Preferably the frequency is reduced with increasing numbers of wireless devices being part of the domain.

In a further advantageous implementation it is proposed a wireless network wherein the wireless devices associated to said domain are assigned each to one out of a plurality of groups,
wherein the real time windows are defined in such a way that two real time windows of different groups do not overlap.

In order to find a balance with regards to network resources, it is suggested that the wireless network is configured that way that the wireless devices that are part of one domain are additionally assigned to groups.

These groups do not have to be known to the wireless devices themselves, they are just for internal management of the wireless network. How the wireless devices are assigned to groups is arbitrary. Preferably device parameter like IMEI or IMSI, as well as the timestamp of the registration can be chosen. So the assignment to a group is not necessary stable over the lifetime of a wireless device.

Each group comprises at maximum as many wireless devices as network resources are available. This allows the wireless devices to communicate with the wireless network in parallel. Therefore the establishment of groups improves the resource management of the wireless network.

According to this embodiment the domain specific predefined schedule defines realtime windows that way, that each member of a group has assigned the same realtime window. The goal is to reach a staggering of communication according to the groups.

The definition of the realtime window per group follows the following rule.

According to this rule, the realtime windows of two different groups do not overlap. That means that for any point in time it can be defined which wireless devices are in the realtime window, and the affected wireless devices always belong to the same group. In terms of full exploitation of the available network resources it is even advantageous if the domain specific predefined schedule is defined that way that the realtime windows of different groups are defined as being adjacent.

The rules according to the previous embodiment are of course applicable to the realtime window that is defined for each of the plurality of groups, and in effect for the wireless devices that are assigned to the single groups.

In a combination with the frequency related rule above this would mean: The time between two realtime windows for one group is enlarged. For the example above, this means that the total repetition time is increased e.g. from one to two days, which would increase the capacity by 100%.

The advantage of this embodiment is on the one hand that it allows the wireless network to take measures to cope with increasing numbers of wireless devices in a domain, like in the M2M domain, before it is required to invest in more network resources. This gives the wireless network more flexibility, in particular for temporary increases of wireless devices, at least locally.

On the other hand, the wireless devices itself can take advantage during their realtime window of the full performance of the network resources. As M2M devices usually send only small data amounts to its central servers, while an update - which is typically rolled out to a bigger amount of wireless devices - requires far more network resources, it is important to handle the MT communication with this invention and the preferred embodiments.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
Figure 1 represents a wireless device of the type to which the present invention is applied as an embodiment;
Figure 2 shows a timeline of signalling according to the prior art;
Figure 3 shows a timeline of signalling according to a first embodiment of the invention;
Figure 4 shows a timeline of signalling according to a second embodiment of the invention;
Figure 5 shows a timeline of signalling according to a third embodiment of the invention;

### DETAILED DESCRIPTION OF EMBODIMENTS OF THE INVENTION

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled.

For clarity, only those elements and steps which are useful to the understanding of the present invention have been shown in the drawings and will be described. Moreover, when an action is said to be performed by a device, it is in fact executed by a microprocessor in this device controlled by instruction codes recorded in a program memory on the said device.

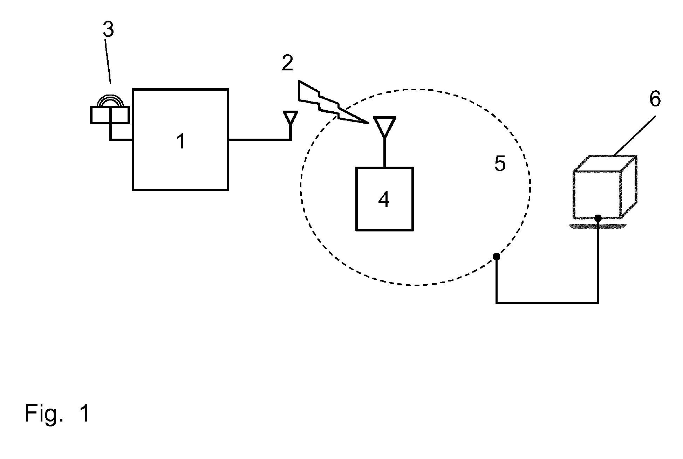

FIG. 1 schematically shows a wireless device 1 of the type to which the present invention is applied as an embodiment. It further shows a wireless network 5 of the type of to which a second aspect of present invention is applied as an embodiment.

This wireless device 1 is configured to communicate with the wireless network 5. The hardware interface to the wireless link is on the wireless device's 1 side the antenna 2 and on the wireless network's 5 side one of a plurality of network nodes 4. The type of network node 4 is depending upon the supported technology standard. In case of a 2G network the network node 4 is a base station, in case of a 3G network it is a NodeB and in case of a 4G network it is a eNodeB. Present invention is of course not limited to these embodiments, hence future developments on network nodes 4 are also incorporated.

The wireless device 1 is in present embodiment formed as machine-to-machine device (M2M device). This means it is configured to communicate with a remote device 6, which is typically a central server. The wireless device 1 comprises a sensor 3 which is detecting any kind of metrics. This can in particular be a metering device measuring power consumption, or any other consumption. This can further be vending machines measuring the filling status of the products, it can be medical devices measuring life functions, and it can be any other type of machine measuring if it is functioning well. In case a measurement is made, a measurement reaches a certain value or threshold, or a certain amount of measurements made reach a certain value or threshold, the wireless device 1 is configured to send a message relative to the measurement to a remote device 6, resp. the central server. The central server is typically designed as a collector of such messages from a plurality of wireless devices 1, and allows taking certain measures in response to the incoming measurements.

The remote device 6 is connected to the wireless network 5 via a landline communication link, preferably on IP basis. It is usually an internet based communication that allows routing of messages through the wireless network 5 to the remote device 6, and in return.

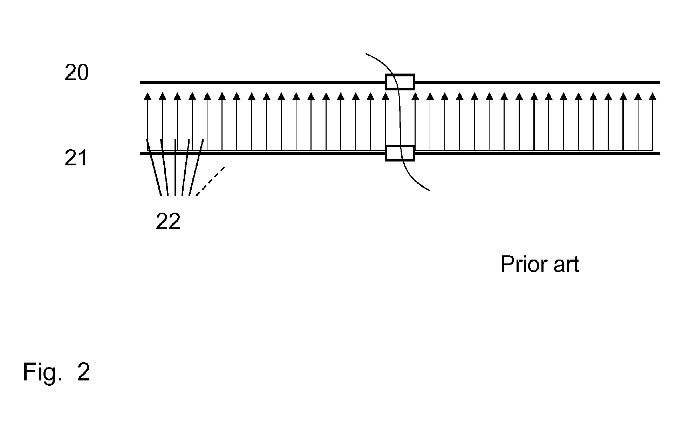

Fig. 2 shows a timeline of signalling between the wireless network 5 and a wireless device 1 according to the prior art. The wireless network timeline 21 and the wireless device timeline 20 are shown in parallel. The situation is shown of a wireless device 1 in idle mode. That means, there is no active connection to the wireless network 5, but the wireless device 1 is registered to the wireless network 5. In order to inform the wireless device 1 about any incoming communication or about messages internal to the wireless network 5, a paging message 22 is sent to the wireless device 1 according to a periodic time pattern. According to the configuration of the wireless network 5 the time span between two paging messages 22 is a constant value in the area of 640 ms up to 5.12 seconds for a wireless network 5 supporting 3G technology.

The wireless device 1 is configured to decode each of the paging messages 22 and to take measures in response to a paging message 22 provided the paging messages 22 contains any information that requires to take said measures. Said information could be an information relating to an incoming call. The measure for the wireless device 1 would then be to inform the user (this is typically done by mobile phones), or to directly accept or decline the call, which is the typical configuration for M2M devices.

The same applies to incoming messages, which can be read after the wireless device 1 retrieves through a paging message 22 the information about such a message. This procedure does not materially differ for the two situations if a dedicated message or a broadcast message is announced through the paging message 22.

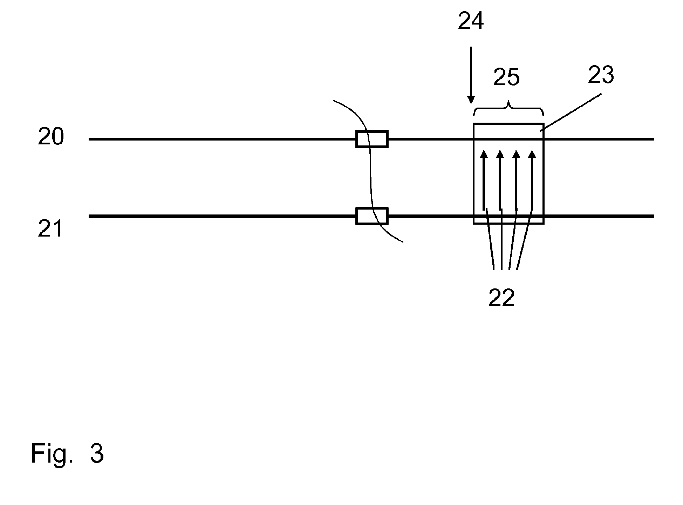

Fig. 3 shows the timelines of signalling according to a preferred embodiment of the invention. The setup is the same as in the prior art. The difference is that now a realtime window 23 is defined according to a predefined schedule of the wireless device 1. According to that predefined schedule the realtime window is defined in terms of a start point 24 defined in particular in day, hour, minutes, which marks the beginning of the realtime window. Further the realtime window is defined by a duration 25, defined in seconds, minutes or hours. Alternatively it is also possible to define the end of the realtime window also in terms of a point in time.

Finally the realtime window is defined through a frequency of repetition, which means after how many days, hours, etc. the next realtime window starts. Preferably this frequency is in respect of full days, weeks or months. During the realtime window the wireless device 1 according to this embodiment is configured to decode paging messages 22 from the wireless network 5. In a further advantageous embodiment also the wireless network 5 is configured that way to only send paging messages to the wireless device 1 during the realtime window assigned to the wireless device 1. For this it is advantageous to know for the wireless network 5 about the predefined schedule of the wireless device 1.

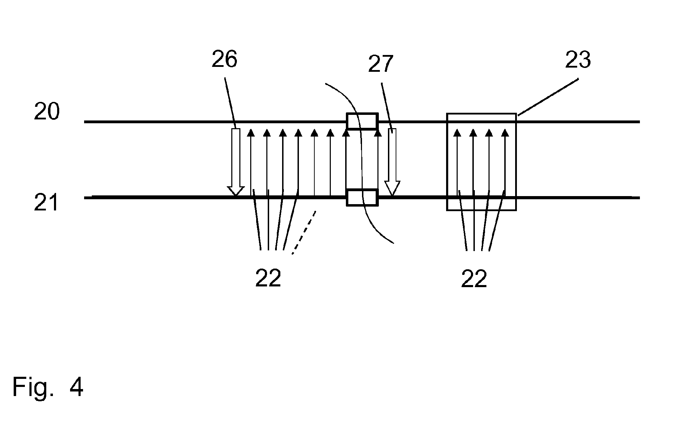

Fig. 4 shows in another embodiment the timelines from Fig. 3. Here the known realtime window 23, which is defined as before, appears with the paging messages 22 that are decoded by the wireless device 1. Additionally it is shown the start of a mobile originated (MO) communication 26. With that the wireless device 1 starts a communication, in particular sends measurements to a remote device 6, by means of the wireless network 5.

Now the wireless device 1 is in addition to the already known realtime window configured to decode paging messages 22 from the wireless network 5 for a certain phase. This is advantageous due to the fact that the wireless device 1 is anyhow in communication to the wireless network 5. Any overhead in terms of energy consumption for a wakeup of the wireless device 1 is also not applicable, as the wireless device 1 itself decided to wake up for the planned communication. Moreover the wireless network 5 has to send information concerning the started MO communication 26 back to the wireless device. This is inevitably part of the MO communication.

Said phase is preferably finite, there are a couple of options how the end of this phase is defined. In this exemplary embodiment it is used a MO stop message 27 defining the end of the communication. After this MO stop message 27 no further paging messages are decoded by the wireless device 1, and preferably not sent by the wireless network 5. Now the next time where the wireless network 5 can successfully send messages to the wireless device 1 is when the next realtime window 23 is scheduled, or when another MO communication 26 is started.

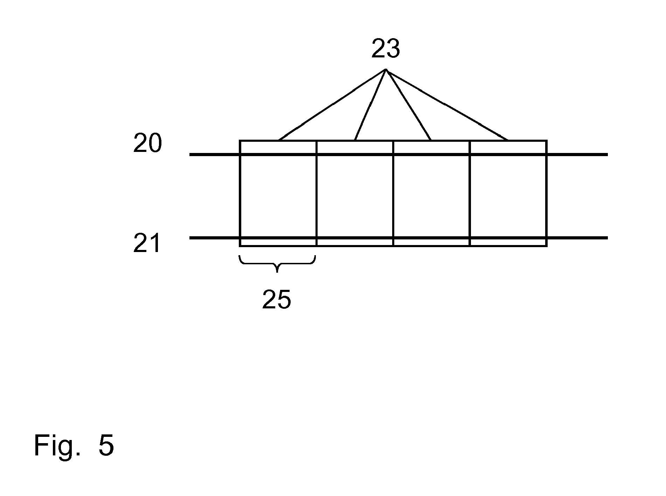

Fig. 5 shows in a further advantageous embodiment the situation concerning a multitude of wireless devices 1 assigned to a domain in the wireless network 5. In order to assure that for each wireless device 1 enough network resources are available for communication within the short slot of the realtime window 23, the wireless devices 1 assigned to said domain receive different realtime windows 23. The realtime windows 23 for two wireless devices 1 can according to that differ.

It is now to clarify how the realtime windows 23 are defined. According to a first embodiment the length 25 of the realtime window 23 is defined in dependence of the amount of wireless device 1 within the domain of the wireless network 5. The shorter the realtime window 23 is, the more wireless devices 1 can be served.

Further according to a second embodiment the frequency of repetition can be decreased, or in other words the time span between two repetitions of the realtime window 23 for a specific wireless device 1 is increased.

In a third embodiment groups are defined where the wireless devices 1 are assigned to, in particular by the wireless network 5. This can be done according to an identifying number like the IMEI, IMSI or MSISDN. This can further be done depending on the time of registration. Other options are also possible. The wireless devices 1 assigned to one group each follow identical realtime windows 23. It is advantageous to define the number of wireless devices 1 of the groups as large as the number of available network resources within the wireless network 5, in order to be able to serve all wireless devices 1 reliably in parallel.

For that it is advantageous to define the realtime windows 23 according to the group specific predefined schedule that way, that the embodiments above are respected. It is further advantageous to define the realtime windows that way that the realtime windows of different groups do not overlap, like shown in Fig. 5. It is furthermore advantageous in order to fully use the available resources to define the realtime windows that way that the realtime windows are even adjacent, as shown in Fig. 5. With that embodiment an even distribution of the communication to wireless devices 1 according to the present invention and its embodiments is reached and the network resources of the wireless network 5 are perfectly used.

## Claims

1. Wireless device (1) configured to operate in a wireless network (5) configured to transmit signalling intended to be decoded by wireless devices (1) according to a periodic time pattern,
the wireless device (1) being further configured to communicate with at least one remote device (6) by means of the wireless network (5) according to a predefined schedule defining realtime windows (23),
wherein the communication according to the predefined schedule comprises:
- when operating inside said realtime window (23)
- decoding signalling originated from the wireless network (5) according to the periodic time pattern and
- when operating outside said realtime window (23)
- ignoring signalling originated from the wireless network (5) and
- whenever operating inside or outside of said realtime window (23), when information to be sent to the remote device (6) is available
- initiating communication to said remote device (6).

2. Wireless device (1) according to claim 1,
said wireless device (1) being further configured to decode signalling originated from the wireless network (5) outside of the realtime window (23) for a predefined period following a communication (26) initiated by the wireless device (1).

3. Wireless device (1) according to claim 1 or 2,
said wireless device (1) being further configured to decode signalling according to an uninterrupted periodic time pattern upon decoding of signalling originated from the wireless network (5) comprising a respective indication.

4. Wireless device (1) according to claim 3,
said wireless device (1) being further configured to return to the predefined schedule under the condition that
- a communication initiated from the wireless network (5) has ended, or
- an indication from the wireless network (5) indicates the return, or
- after a predefined period has expired.

5. Wireless device (1) according to at least one of the claims 1 to 4,
said wireless device (1) being further configured to change the realtime window (23) according to the predefined schedule upon decoding of said signalling originated from the wireless network (5) comprising a respective indication.

6. Wireless device (1) according to at least one of the claims 1 to 5,
said wireless device (1) being associated to a set of subscriptions, themselves associated to the wireless network (5), hereinafter domain, wherein
the wireless device (1) is configured to communicate according to a domain specific predefined schedule.

7. Wireless device (1) according to claim 6,
wherein the domain specific predefined schedule comprises a rule to define a realtime window (23) specific to the wireless device (1).

8. Method for operating a wireless device (1) in a wireless network (5),
the wireless network (5) being configured to transmit signalling intended to be decoded by wireless devices (1) according to a periodic time pattern, wherein the operating method is such that the wireless device (1) communicates with at least one remote device (6) by means of the wireless network (5) according to a predefined schedule defining realtime windows (23),
this communication according to the predefined schedule comprising the steps of:
- when operating inside said realtime window (23)
- decoding signalling originated from the wireless network (5) according to the periodic time pattern and
- when operating outside said realtime window (23)
- ignoring signalling originated from the wireless network (5) and
- whenever operating inside or outside of said realtime window (23), when information to be sent to the remote device (6) is available
- initiating communication to said remote device (6).

9. Wireless network (5) configured to operate a plurality of wireless devices (1) according to one of the claims 1 to 7,
wherein the wireless network (5) is further configured to
- store an information about a predefined schedule defining realtime windows (23) for at least one wireless device (1),
- detect a planned signalling dedicated for said wireless device (1),
- wait until said wireless device (1) is ready for decoding of signalling originated from the wireless network (5) before transmitting said planned signalling.

10. Wireless network (5) according to claim 9,
wherein, in response to said detection, the wireless network (5) is configured to send an instruction to the wireless device (1) related to said planned signalling once the wireless device (1) is ready for decoding signalling originated from the wireless network (5).

11. Wireless network (5) according to at least one of the claims 9 or 10, wherein said instruction indicates that the wireless device (1) has to decode signalling according to an uninterrupted periodic time pattern.

12. Wireless network (5) according to at least one of the claims 9 to 11, wherein the wireless network (5) is configured to send said indication to the wireless device (1) once the wireless device (1) initiated a communication (26) to the wireless network (5).

13. Wireless network (5) according to at least one of the claims 9 to 12, comprising a set of subscriptions for wireless devices (1), hereinafter domain, wherein the wireless devices (1) associated to said domain are configured to communicate according to a domain specific predefined schedule.

14. Wireless network (5) according to claim 13,
wherein the real time windows (23) are defined by at least one of the rules:
- the length (25) of the real time window (23) is depending upon the number of wireless devices (1) assigned to the domain, and/or
- the frequency of repetition of the real time window (23) is depending upon the number of wireless devices (1) assigned to the domain.

15. Wireless network (5) according to claim 13 and 14,
wherein the wireless devices (1) associated to said domain are assigned each to one out of a plurality of groups,
wherein the real time windows (23) are defined in such a way that two real time windows (23) of different groups do not overlap.
